# EUROPEAN PATENT APPLICATION

(11) **EP 4 506 201 A1**
(43) Date of publication of application: **12.02.2025**
(21) Application number: 24193535.2
(22) Date of filing: 08.08.2024
(51) Int. Cl.: B60L 15/00, B60L 50/60, B60L 58/21, H02J 7/00, H02M 7/49

(54) **VEHICLE BATTERY MODULE INCLUDING POWER CONVERSION DEVICE AND VEHICLE BATTERY SYSTEM FORMED BASED ON VEHICLE BATTERY MODULES**

(30) Priority: 09.08.2023 KR 20230104426; 15.07.2024 KR 20240093251
(71) Applicant: Hyundai Motor Company, Seoul 06797 (KR); Kia Corporation, Seocho-gu Seoul 06797 (KR)
(72) Inventor: HONG, Sung Min, Seoul (KR); LEE, Yong Gyu, Seoul (KR)
(74) Representative: Hoffmann Eitle

(57) **Abstract**

A vehicle battery module includes a battery, a first DC/DC converter, a second DC/DC converter, and an inverter. The vehicle battery system according to an example embodiment of the present disclosure includes a plurality of vehicle battery modules, and includes a first DC system output end in which first DC module output ends of the first DC/DC converter are connected in parallel to each other, a second DC system output end in which second DC module output ends of the second DC/DC converter are connected in series to each other, and an AC system output end configured in which AC module output ends of the inverter are connected in series to each other.

## Description

### CROSS-REFERENCE TO RELATED APPLICATION(S)

This application claims benefit of priority to Korean Patent Application Nos. 10-2023-0104426 filed on August 9, 2023 and 10-2024-0093251 filed on July 15, 2024 in the Korean Intellectual Property Office, the disclosure of which is incorporated herein by reference in its entirety.

### BACKGROUND

### 1. FIELD

The present disclosure relates to a vehicle battery module including a power conversion device, and a vehicle battery system formed based on a plurality of vehicle battery modules.

### 2. DESCRIPTION OF RELATED ART

At present, increasing interest in issues such as energy efficiency, environmental pollution, and fossil fuel depletion has led to the active development of eco-friendly vehicles that may practically replace internal combustion engine vehicles.

Eco-friendly vehicles may include battery electric vehicles (BEVs) using batteries as a power source, fuel cell electric vehicles (FCEVs) using fuel cells as a main power source, and hybrid electric vehicles (HEVs) using both an engine and a motor as a driving device to drive a vehicle.

The eco-friendly vehicles described above may be referred to as electric vehicles (xEVs) in a broad sense, and may have in common that they are both motor-driven vehicles and electrified vehicles, running by driving a motor with power from a high-voltage power source such as a battery or fuel cell.

An electric vehicle may be equipped with a high-voltage battery supplying power to a motor, and the high-voltage battery may be repeatedly charged and discharged during vehicle operations to supply power to power electronics components in a vehicle, such as a motor or the like. A size and type of voltage required for each type of power electronics component may vary, and thus, various types of power conversion devices may be required to convert an output voltage of the high-voltage battery. In this case, a power conversion device may need to convert a high voltage output from the high-voltage battery, such that a high-voltage power conversion device may be necessary, but a high price thereof may increase production costs.

### SUMMARY

An aspect of the present disclosure is to form an electric vehicle driving system according to the related art, operating based on a high voltage, to include a series or parallel combination of a plurality of battery modules operating at a low voltage, thereby enabling the use of power conversion devices operating at a low voltage.

Another aspect of the present disclosure is to form a battery system by connecting standardized battery modules in series or parallel to each other, thereby outputting various magnitudes of output voltages depending on a purpose thereof, and responding to various specifications required for types of vehicles.

Aspects of the present disclosure are not limited to the above-described aspects, and other aspects, not set forth herein, could be clearly understood by those skilled in the art from descriptions below.

The present disclosure provides a vehicle battery module, a single-phase vehicle battery system formed based on the vehicle battery module, and a three-phase vehicle battery system.

According to an aspect of the present disclosure, there is provided a vehicle battery module including a battery configured to output a battery voltage, a first DC/DC converter configured to convert the battery voltage into a first DC module voltage lower than the battery voltage, and to output the first DC module voltage, a second DC/DC converter configured to convert the battery voltage into a second DC module voltage higher than the first DC module voltage, and to output the second DC module voltage, and an inverter configured to convert the battery voltage into an AC module voltage, and to output the AC module voltage.

According to another aspect of the present disclosure, there is provided a single-phase vehicle battery system including a plurality of vehicle battery modules including a first DC module output end configured to output a first DC module voltage from an internal battery voltage, a second DC module output end configured to output a second DC module voltage, and an AC module output end configured to output an AC module voltage, a first DC system output end in which the first DC module output ends, respectively included in the plurality of vehicle battery modules, are connected in parallel to each other, a second DC system output end in which the second DC module output ends, respectively included in the plurality of vehicle battery modules, are connected in series to each other, and an AC system output end in which the AC module output ends, respectively included in the plurality of vehicle battery modules, are connected in series to each other.

According to another aspect of the present disclosure, there is provided a three-phase vehicle battery system including a plurality of single-phase vehicle battery systems formed based on a plurality of vehicle battery modules including a first DC module output end configured to output a first DC module voltage from an internal battery voltage, a second DC module output end configured to output a second DC module voltage, and an AC module output end configured to output an AC module voltage, the plurality of single-phase vehicle battery systems including a first DC system output end in which the first DC module output ends, respectively included in the plurality of vehicle battery modules, are connected in parallel to each other, a second DC system output end in which the second DC module output ends, respectively included in the plurality of vehicle battery modules, are connected in series to each other, and an AC system output end in which the AC module output ends, respectively included in the plurality of vehicle battery modules, are connected in series to each other. The AC system output ends, respectively included in the plurality of vehicle single-phase battery systems, may be configured to output different AC system voltages having the same phase difference.

According to example embodiments of the present disclosure, a power conversion element, operable at a low voltage, using a standardized battery module operating at a low voltage, thereby reducing production costs.

In addition, even when a voltage or specifications required for each type of vehicle vary, standardized battery modules may be combined in series or parallel with each other, thereby satisfying various specifications. The standardized battery modules may be mass-produced, thereby reducing production costs.

In addition, the standardized battery modules may be connected in series or parallel to each other to form a battery module system, thereby increasing space use efficiency to reduce an overall volume, replacing each battery module in the event that a failure occurs in a portion of a battery module to easily make repairs, and controlling balancing for each battery module to increase overall energy efficiency.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 illustrates an electric vehicle driving system including a general high-voltage battery pack;
FIGS. 2 and 3 illustrate a battery module according to an example embodiment of the present disclosure;
FIG. 4 is a diagram illustrating a connection structure between a plurality of battery modules according to an example embodiment of the present disclosure;
FIG. 5 illustrates a single-phase battery system according to an example embodiment of the present disclosure;
FIG. 6 is a diagram illustrating a connection relationship between inverters in a three-phase battery system according to an example embodiment of the present disclosure;
FIG. 7 is a diagram illustrating a connection relationship between first DC/DC converters in a three-phase battery system according to an example embodiment of the present disclosure;
FIG. 8 is a diagram illustrating a connection relationship between second DC/DC converters in a three-phase battery system according to an example embodiment of the present disclosure; and
FIG. 9 is a diagram illustrating an inverter structure according to an example embodiment of the present disclosure.

### DETAILED DESCRIPTION

Hereinafter, specific example embodiments of the present disclosure will be described with reference to the accompanying drawings. The following detailed description is provided to aid in a comprehensive understanding of a method, a device and/or a system described in the present specification. However, the detailed description is for illustrative purposes only, and the present disclosure is not limited thereto.

In describing the example embodiments of the present disclosure, when it is determined that a detailed description of a known technology related to the present disclosure may unnecessarily obscure the gist of the present disclosure, the detailed description thereof will be omitted. In addition, terms to be described below are terms defined in consideration of functions in the present disclosure, which may vary depending on intention or custom of a user or operator. Therefore, the definition of these terms should be made based on the contents throughout the present specification. The terminology used herein is for the purpose of describing particular example embodiments only and is not to be limiting of the example embodiments. As used herein, the singular forms "a," "an," and "the" are intended to include the plural forms as well, unless the context clearly indicates otherwise. As used herein, the term "and/or" includes any one and any combination of any two or more of the associated listed items. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

In addition, a "module voltage" to be described below may refer to a voltage output from a battery module, and a "system voltage" may refer to a voltage output from a battery system formed based on the battery module.

The battery module to be described below may include a vehicle battery module, and the battery system may include a single-phase vehicle battery system and a three-phase vehicle battery system.

In addition, a technology provided in the present disclosure may be used not only for vehicles but also for various devices to which a battery module and a battery system are applicable.

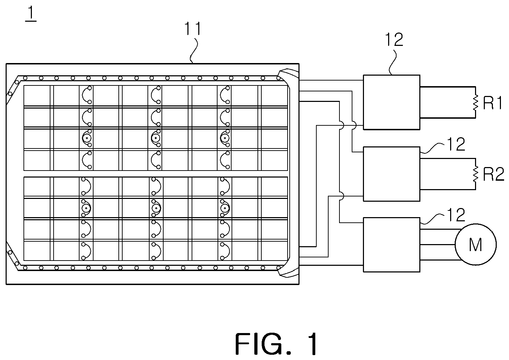

FIG. 1 illustrates an electric vehicle driving system including a general high-voltage battery pack.

Referring to FIG. 1, an electric vehicle driving system 1 may include a general high-voltage battery pack 11 and various power conversion devices 12.

In this case, the general high-voltage battery pack 11 may be formed by a series or parallel combination of a plurality of battery cells, and may not include a power conversion device. In addition, the general high-voltage battery pack 11 may output a single magnitude of high voltage (for example, 480 V to 806.4 V). In addition, the power conversion device 12 may be separated from the high-voltage battery pack 11 and provided in a space, and the high-voltage battery pack 11 and a power conversion device 12 may be connected to each other by a high-voltage cable.

Electric vehicles may have electric loads having various functions, and a magnitude and a type of voltage required for each electric load may vary, and thus various types of power conversion devices 12 may be required. However, the electric vehicle driving system 1 including the general high-voltage battery pack 11 may be based on a single high voltage, and thus a high-voltage power conversion device 12 may need to be used.

More specifically, the electric vehicle driving system 1 may convert a high voltage output from the general high-voltage battery pack 11 into a DC low voltage to provide a driving voltage to a low-voltage load R1 or to charge a low-voltage battery. In this case, energy loss may occur in a process of converting power from a high voltage to a low voltage, which may reduce efficiency, and a voltage may need to be significantly lowered. Thus, a transformer may be additionally required. In addition, the electric vehicle driving system 1 may convert a voltage output from the general high-voltage battery pack 11 to provide a driving voltage to a high-voltage load R2, and may form high-voltage three-phase AC power to drive a motor M. In this case, an inverter, operating at a high voltage, may generally use a SiC power semiconductor for high voltage switching. However, the SiC power semiconductor may have a low yield relative to high demand, which make smooth supply and demand difficult, and may be high-priced, which may increase production costs.

In addition, in the electric vehicle driving system 1, the high-voltage battery pack 11 and the power conversion devices may be separated from each other, such that a space may be required for each component, and a high-voltage cable may need to be used to connect the high-voltage battery pack 11 and the power conversion devices to each other, which may occupy a significant amount of space. In addition, the electric vehicle driving system 1 may generate a large amount of heat due to a high-voltage output of the high-voltage battery pack 11, and a water-cooling system may be required to control heat generation, which may occupy a significant amount of space, and may be heavy.

According to the electric vehicle drive system 1, specifications may vary depending on a type of vehicle, and a battery system may need to be individually designed according to specifications of a type of vehicle, which may complicate a process and increase production costs.

A battery system according to an example embodiment of the present disclosure described below may be formed by a series or parallel combination of a plurality of battery modules, and each battery module may include a low-voltage battery, an inverter operating at a low voltage, and a power conversion device such as a converter or the like.

In other words, a battery system according to an example embodiment of the present disclosure may be formed based on a battery module, and each battery module may include a power conversion device, and thus may store/release electrical energy and perform power conversion within the battery module. Accordingly, the battery module according to an example embodiment of the present disclosure may convert DC power to AC power or convert a magnitude of battery power to output the same, as necessary. In addition, a high-voltage output may be formed by connecting outputs of the battery modules in series to each other, or a high-current output may be formed by connecting the outputs of the battery modules in parallel to each other, and a voltage of each battery module may be monitored and balancing-controlled. Hereinafter, a battery module and a battery system including the same according to an example embodiment of the present disclosure will be described in more detail.

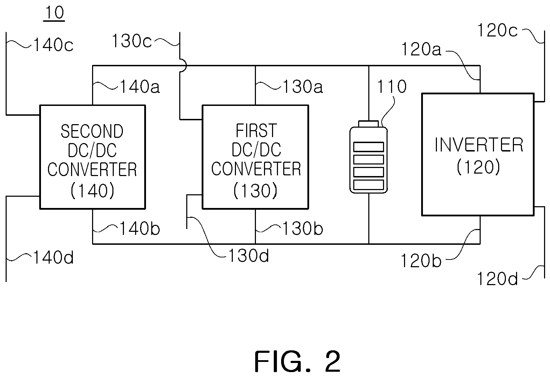

FIG. 2 illustrates a battery module according to an example embodiment of the present disclosure.

Referring to FIG. 2, a battery module 10 according to an example embodiment of the present disclosure may include a battery 110, an inverter 120, a first DC/DC converter 130, and a second DC/DC converter 140.

The battery 110 may output a battery voltage, and may charge or discharge electrical energy. In addition, the battery voltage may form a basic voltage of the battery module 10 to provide an input voltage to the inverter 120, the first DC/DC converter 130, and the second DC/DC converter 140.

In addition, the battery 110 may have a battery voltage having a magnitude, lower than that of the general high-voltage battery pack 11 described with reference to FIG. 1. Accordingly, a power conversion element, operable at a low voltage, may be applied to the vehicle battery module 10 according to an example embodiment of the present disclosure, thereby reducing production costs.

In addition, according to the battery module 10 according to an example embodiment of the present disclosure, various magnitudes and types of voltages may be output depending on a series or parallel combination of the battery modules 10, such that a single-standard battery module 10 may be applied to types of vehicles having various specifications, thereby reducing production costs.

For example, when the battery voltage is set to 100 V, four battery modules 10 may be connected in series to each other to form a battery system outputting a voltage of 400 V, and eight battery modules 10 may be combined in series with each other to form a battery system outputting a voltage of 800 V. In addition, for example, when the battery voltage is set to 50 V, eight battery modules 10 may be connected in series to each other to form a battery system outputting a voltage of 400 V, and sixteen battery modules 10 may be connected in series to each other to form a battery system outputting a voltage of 800 V.

In addition, the battery modules 10 may be connected in series to each other, a single-phase battery system, outputting a high-voltage AC voltage, may be formed using an inverter output, and a three-phase AC voltage may be output using a plurality of single-phase battery systems. In addition, the battery modules 10 may be combined in parallel with each other to form a battery system through which a high current flows.

The inverter 120 may convert the battery voltage into an AC module voltage and output the AC module voltage. In addition, the inverter 120 may include an input end and an output end. An inverter input end may be connected in parallel to a battery to receive a battery voltage, and an inverter output end may output an AC module voltage. Hereinafter, the inverter output end may be referred to as an AC module output end, outputting the AC module voltage. In addition, the inverter 120 may be configured to supply, to the AC load, AC power according to the AC module voltage. In this case, the AC load may be a load such as a motor using an AC voltage as a driving voltage.

In addition, the first DC/DC converter 130 may convert the battery voltage into a first DC module voltage lower than the battery voltage, and may output the first DC module voltage.

In addition, the first DC module voltage may be set to a driving voltage of a low-voltage load. For example, the low-voltage load may be an electric load such as various lamps radios, infotainment, or the like of an electric vehicle. In addition, the first DC module voltage may be set to 12 V, 24 V, or 48 V, which is the driving voltage of the low-voltage load. However, a magnitude of voltage mentioned herein is only one example, and may be set to a voltage having various magnitudes depending on a design thereof.

In addition, the first DC/DC converter may include input ends 130a and 130b and output ends 130c and 130d. The input ends 130a and 130b of the first DC/DC converter may be connected in parallel to the battery to receive a battery voltage, and the output ends 130c and 130d of the first DC/DC converter may output the first DC module voltage. Hereinafter, the output ends 130c and 130d of the first DC/DC converter may be referred to as first DC module output ends, outputting the first DC module voltage.

In addition, the output ends 130c and 130d of the first DC/DC converter may be directly connected to the low-voltage load to provide the first DC module voltage.

In an example embodiment, one output end 130d, among the output ends of the first DC/DC converter, may be grounded, and the other output end 130c, among the output ends of the first DC/DC converter, may be connected to the low-voltage load to output the first DC module voltage. In another example embodiment, both output ends of the first DC/DC converter may be connected to both ends of the low-voltage load to output the first DC module voltage.

In addition, the second DC/DC converter 140 may convert a battery voltage into a second DC module voltage and output the second DC module voltage. The second DC module voltage may be set to a value, greater than that of the first DC module voltage output from the first DC/DC converter 130. In addition, the second DC module voltage may be lower than or equal to the battery voltage, or may be higher than the battery voltage.

In addition, the second DC module voltage, output from the second DC/DC converter 140, may be connected in series to a second DC module voltage output from another battery module 10 to provide power to a high-voltage load. In other words, the second DC module voltage, output from the second DC/DC converter 140, may not provide power to the high-voltage load as a single output, but may be connected in series to the second DC module voltage of another battery module 10 to provide power to the high-voltage load. A battery voltage, included in the battery module 10, may be formed as a low voltage. In order to provide a voltage to a high-voltage load such as an air conditioning system or the like, a plurality of battery modules 10 may be combined in series with each other to provide a high voltage. In other words, the output ends of the second DC/DC converter may be connected in series to output ends of a second DC/DC converter of another battery module to form a high voltage, thereby providing power to the high-voltage load.

In addition, the second DC/DC converter may include input ends 140a and 140b and output ends 140c and 140d. The input ends 140a and 140b of the second DC/DC converter may be connected in parallel to the battery 110 to receive a battery voltage, and the output ends 140c and 140d of the second DC/DC converter may output a second DC module voltage. As used herein, the output ends 140c and 140d of the second DC/DC converter may also be referred to as second DC module output ends, outputting the second DC module voltage.

In addition, the output ends 140c and 140d of the second DC/DC converter may be connected in series to output ends of a second DC/DC converter included in another battery module, or may be connected to a high-voltage load. In this case, a specific connection structure with another battery module 10 will be described below.

In addition, the battery 110 may be connected in parallel to the input ends 120a and 120b of the inverter, the input ends 130a and 130b of the first DC/DC converter, and the input ends 140a and 140b of the second DC/DC converter.

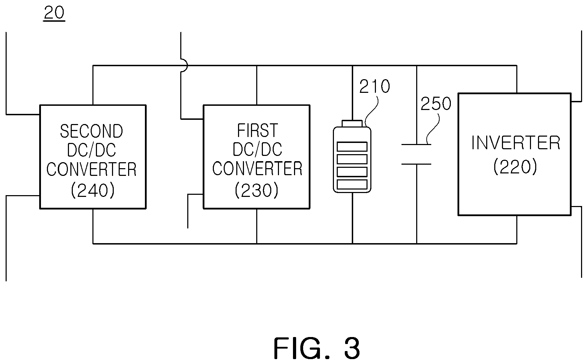

FIG. 3 illustrates a battery module according to an example embodiment of the present disclosure.

Referring to FIG. 3, a battery module 20 according to an example embodiment of the present disclosure may include a battery 210, an inverter 220, a first DC/DC converter 230, a second DC/DC converter 240, and a common capacitor 250. In addition, the common capacitor 250 may be connected in parallel to the battery 210. The battery module 20, illustrated in FIG. 3, may include all components of the battery module 10 illustrated in FIG. 2, and may further include the common capacitor 250.

According to the battery module 20 according to an example embodiment of the present disclosure, one common capacitor may be shared without applying a capacitor for each inverter and each converter element. Accordingly, a volume thereof may be reduced, and a low-voltage capacitor may be applied, thereby reducing production costs.

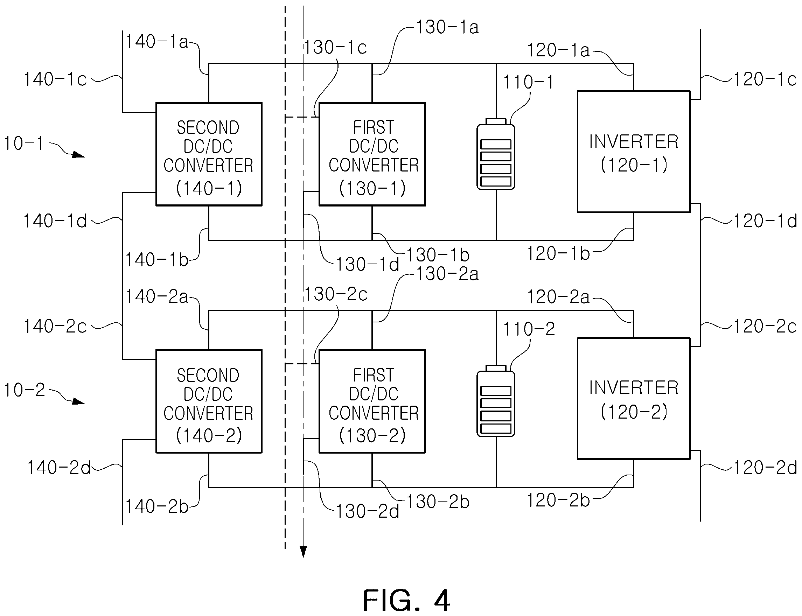

FIG. 4 is a diagram illustrating a connection structure between a plurality of battery modules according to an example embodiment of the present disclosure.

Referring to FIG. 4, a first battery module 10-1 and a second battery module 10-2 may include the same components, and may have the same structure. In addition, as described with reference to FIG. 2, the first battery module 10-1 and the second battery module 10-2 may include batteries 110-1 and 110-2, inverters 120-1 and 120-2, first DC/DC converters 130-1 and 130-2, and second DC/DC converters 140-1 and 140-2, respectively. Alternatively, as described with reference to FIG. 3, the first battery module 10-1 and the second battery module 10-2 may further include a common capacitor.

In addition, a plurality of battery modules may be connected to each other to form a battery system, and a connection relationship between each of the plurality of battery modules, included in the battery system, may be the same as the structure illustrated in FIG. 4.

More specifically, output ends 120-1c and 120-1d of the inverter, included in the first battery module 10-1, may be connected in series to output ends 120-2c and 120-2d of the inverter, included in the second battery module 10-2. In addition, when an inverter outputs an AC module voltage, the inverter 120-1, included in the first battery module, and the inverter 120-2, included in the second battery module, may be connected in series to each other to output an AC module voltage having a magnitude twice as high as that of the AC module voltage. For example, when the AC module voltage is set to 100V, the two inverters 120-1 and 120-2, connected in series to each other, may output an AC voltage of 200V. In this case, a magnitude of the AC voltage may refer to a maximum value, an effective value, or an average value of the AC voltage.

In addition, output ends 130-1c and 130-1d of the first DC/DC converter, included in the first battery module 10-1, may be connected in parallel to output ends 130-2c and 130-2d of the first DC/DC converter, included in the second battery module 10-2. In an example embodiment, one output end 130-1d, among the output ends of the first DC/DC converter included in the first battery module 10-1, may be grounded, and one output end 130-2d, among the output ends of the first DC/DC converter included in the second battery module 10-2, may be grounded. In addition, the other end 130-1c, among the output ends of the first DC/DC converter included in the first battery module 10-1, may be connected in parallel to the other output end 130-2c, among the output ends of the first DC/DC converter included in the second battery module 10-2, to output a first DC module voltage. In addition, the output ends connected in parallel to each other, among the output ends of the first DC/DC converters, may output a first DC module voltage, and may be connected to a low-voltage load using the first DC module voltage as a driving voltage to provide a voltage.

In addition, output ends 140-1c and 140-1d of the second DC/DC converter, included in the first battery module 10-1, may be connected in series to output ends 140-2c and 140-2d of the second DC/DC converter, included in the second battery module 10-2. More specifically, one output end 140-1d, among the output ends of the second DC/DC converter included in the first battery module 10-1, may be connected to the other output end 140-2c, among the output ends of the second DC/DC converter of the second battery module 10-2.

In addition, when a second DC/DC converter outputs a second DC module voltage, the second DC/DC converter 140-1, included in the first battery module, and a second DC/DC converter 140-2, included in the second battery module, may be connected in series to each other to output a second DC module voltage having a magnitude twice as high as that of the second DC module voltage. For example, when the second DC module voltage is set to 100 V, the two second DC/DC converters 140-1 and 140-2 may be connected in series to each other to output 200 V.

That is, the first battery module 10-1 and the second battery module 10-2 may be connected in series to each other, the first DC/DC converters may be connected in parallel to each other, and the second DC/DC converters may be connected in series to each other.

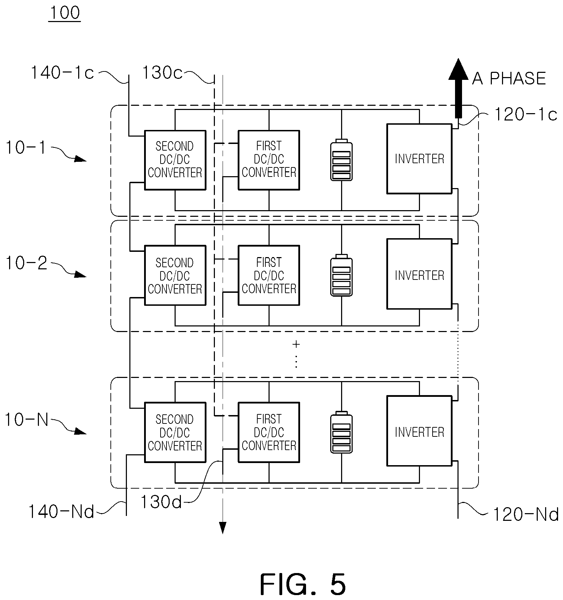

FIG. 5 illustrates a single-phase battery system according to an example embodiment of the present disclosure.

Referring to FIG. 5, a single-phase battery system 100 according to an example embodiment of the present disclosure may include a plurality of battery modules 10-1, 10-2, ..., 10-N. In addition, each of the plurality of battery modules 10-1, 10-2, ..., 10-N, included in the single-phase battery system 100, may be the same as the battery modules 10 and 20 illustrated in FIG. 2 or 3. In addition, the plurality of battery modules 10-1, 10-2, ..., 10-N, included in the single-phase battery system 100, may have a connection structure between battery modules illustrated in FIG. 4.

Referring back to FIG. 3, the battery module according to an example embodiment of the present disclosure may include first DC module output ends 130c and 130d corresponding to output ends of a first DC/DC converter, second DC module output ends 140c and 140 corresponding to output ends of a second DC/DC converter, and AC module output ends 120c and 120d corresponding to output ends of an inverter.

In addition, referring to FIG. 5, the single-phase battery system 100 according to an example embodiment of the present disclosure may include first DC system output ends 130c and 130d in which first DC module output ends, respectively included in the plurality of battery modules, are connected in parallel to each other. In this case, the first DC system output ends 130c and 130d may output a first DC system voltage, and the first DC system voltage may have a magnitude, the same as that of a first DC module voltage output from the output ends of the first DC/DC converter.

In addition, the single-phase battery system 100 according to an example embodiment of the present disclosure may include second DC system output ends 140-1c and 140-Nd in which second DC module output ends, respectively included in the plurality of battery modules, are connected in series to each other. Here, the second DC system output ends 140-1c and 140-Nd may output a second DC system voltage, and the second DC system voltage may have a magnitude, integer (N) times as high as that of a second DC module voltage output from the output ends of the second DC/DC converter.

In addition, the single-phase battery system 100 according to an example embodiment of the present disclosure may include AC system output ends 120-1c and 120-Nd in which AC module output ends, respectively included in the plurality of battery modules, are connected in series to each other. In addition, the AC system output ends 120-1c and 120-Nd may output an AC system voltage, and the AC system voltage may have a magnitude, integer (N) times as high as that of an AC module voltage output from the output ends of the inverter. The AC system output ends may provide AC power to an AC load, and may provide an input voltage for one phase of a three-phase AC voltage.

That is, in the single-phase battery system 100, respective elements of the plurality of battery modules may be connected in series or parallel to each other to provide various output voltages including a first DC system voltage, a second DC system voltage, and an AC system voltage.

In addition, an electric vehicle may include a low-voltage load R1 operating at a low voltage, a high-voltage load R2 operating at a high voltage, and an AC load, such as a motor M, operating at a high-voltage three-phase AC voltage. In addition, the low-voltage load may use a first DC system voltage as a driving voltage, the high-voltage load may use a second DC system voltage as a driving voltage, and the AC load may use an AC system voltage as a driving voltage.

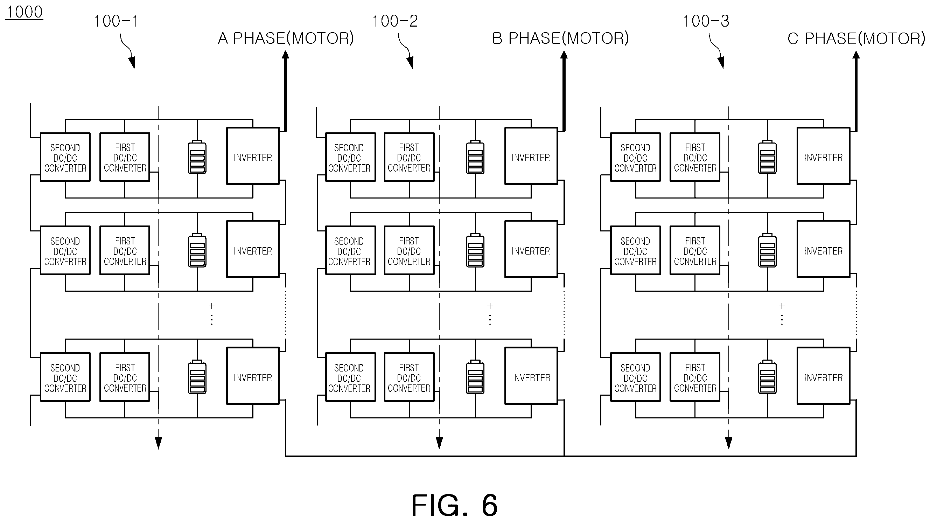

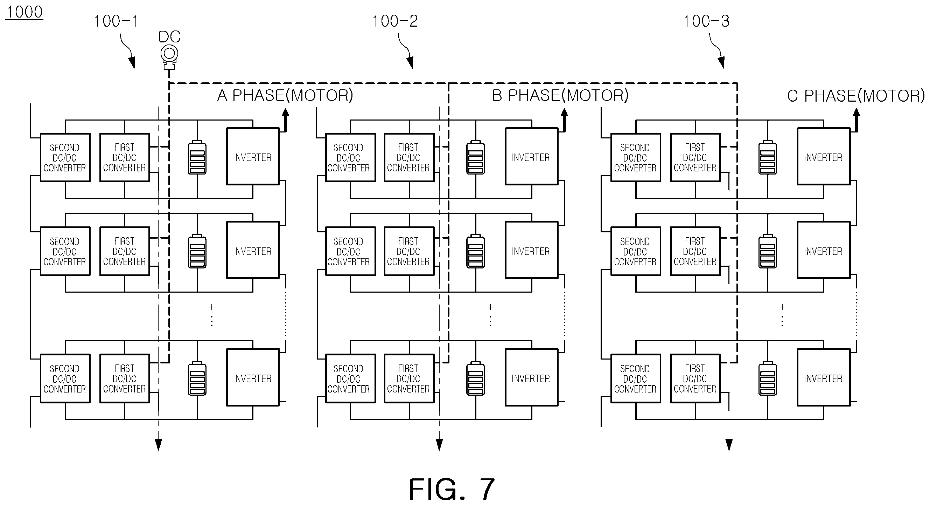

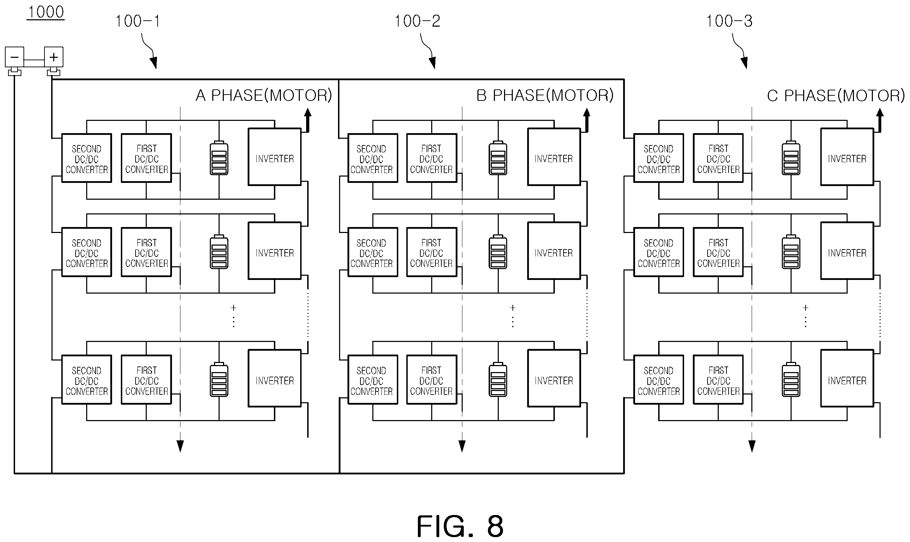

FIG. 6 is a diagram illustrating a connection relationship between inverters in a three-phase battery system 1000 according to an example embodiment of the present disclosure. FIG. 7 is a diagram illustrating a connection relationship between first DC/DC converters in a three-phase battery system according to an example embodiment of the present disclosure. FIG. 8 is a diagram illustrating a connection relationship between second DC/DC converters in a three-phase battery system according to an example embodiment of the present disclosure.

Referring to FIGS. 6 to 8, the three-phase battery system 1000 according to an example embodiment of the present disclosure may include a plurality of single-phase battery systems 100-1, 100-2, and 100-3, and each of the single-phase battery systems may include a plurality of battery modules.

Referring to FIG. 6, the three-phase battery system 1000 according to an example embodiment of the present disclosure may include three single-phase battery systems 100-1, 100-2, and 100-3. In addition, the single-phase battery systems may include an AC system output end in which inverter output ends are connected in series to each other. In addition, the AC system output ends, respectively included in the three single-phase battery system, may output different AC voltages having the same magnitude and the same phase difference.

For example, the AC system output ends, respectively included in the three single-phase battery system, may output different AC voltages having a phase difference of 120 degrees. Accordingly, the three-phase battery system may output a three-phase AC voltage, and may provide a driving voltage to a motor using the three-phase AC voltage as a driving voltage.

In addition, referring to FIG. 7, each of the plurality of single-phase battery systems 100-1, 100-2, and 100-3, included in the three-phase battery system 1000 according to an example embodiment of the present disclosure, may include a first DC system output end in which a plurality of first DC /DC converters are connected in parallel to each other to output a first DC system voltage. In addition, the first DC system output ends, respectively included in the plurality of single-phase battery systems 100, may be connected in parallel to each other.

In other words, when the single-phase battery system 100 includes N first DC/DC converters, 3 *N first DC/DC converters, included in the three-phase battery system 1000, may all be connected in parallel to each other to output a first AC module voltage or a first DC system voltage having a magnitude, same as that of the first DC module voltage.

In addition, referring to FIG. 8, each of the plurality of single-phase battery systems 100, included in the three-phase battery system 1000 according to an example embodiment of the present disclosure, may include a second DC system output end in which a plurality of second DC/DC converters connected in series to each other to output a second DC system voltage. In addition, the second DC system output ends, respectively included in the plurality of single-phase battery systems, may be connected in parallel to each other. That is, in the single-phase battery system 100, second DC module output ends may be connected in series to form a second DC system output end. In the three-phase battery system 1000, a plurality of second DC system output ends may be connected in parallel to each other.

In addition, the three-phase battery system may further include a controller (not illustrated). The controller may individually control each battery module, and may individually control an inverter, a first DC/DC converter, and a second DC/DC converter included in each battery module. Accordingly, according to an example embodiment of the present disclosure, balancing control for each power conversion element and each battery module may be performed, thereby increasing energy efficiency.

In addition, when an issue occurs in one module, among N battery modules, the controller may perform control to block only the battery module in which the issue has occurred, thereby ensuring reliability of the entire system.

In addition, the controller may individually control each battery module. Accordingly, even when degradation occurs differently for each battery module, degradation performance of each battery module may be actively controlled.

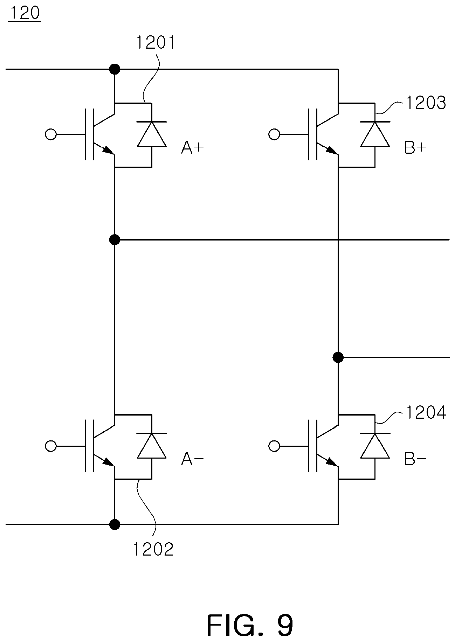

FIG. 9 is a diagram illustrating an inverter structure according to an example embodiment of the present disclosure.

Referring to FIG. 9, the inverter 120 may include a plurality of Si-metal oxide semiconductor field effect transistor (MOSFET) elements 1201, 1202, 1203, and 1204, and may have an H-bridge single-phase inverter structure.

In an electric vehicle system according to the related art, a SiC power semiconductor may be mainly applied. The SiC power semiconductor may have high efficiency and rapid switching speed, but may be high-priced.

In addition, in some cases, the electric vehicle system according to the related art may use an insulated gate bipolar transistor (IGBT) at a low voltage. The IGBT may be relatively low-priced, but may have slow switching speed.

The Si-MOSFET elements may have rapid switching speed, and may be relatively low-priced. However, the Si-MOSFET elements may have degraded performance at a high voltage. Accordingly, it may be difficult to apply the Si-MOSFET elements in the high-voltage electric vehicle system according to the related art.

A battery module according to an example embodiment of the present disclosure may be driven at a low voltage, a Si-MOSFET element may be applied to an inverter. Accordingly, the inverter, included in the battery module according to an example embodiment of the present disclosure, may use a plurality of Si-MOSFET elements to reduce production costs and have a rapid switching speed. Accordingly, fuel efficiency may be improved to increase a travel distance of a vehicle. As the travel distance increases, battery capacity may be reduced to reduce production costs.

In addition, the inverter according to an example embodiment of the present disclosure may have an H-bridge single-phase inverter structure, and may maintain stability even under a high current.

In addition, FIG. 9 illustrates a case of forming an H-bridge circuit using four Si-MOSFETs as an example. However, the H-bridge circuit may be formed by connecting a plurality of Si-MOSFETs in parallel to each other to enable switching of a high current.

As described above, the present disclosure provides a technology for replacing an electric vehicle driving system according to the related art, operating at a high voltage, by connecting standardized battery modules, operating at a low voltage, in series or parallel to each other. The battery modules may be connected in series or parallel to each other, as necessary, thereby providing various outputs.

While example embodiments have been shown and described above, it will be apparent to those skilled in the art that modifications and variations could be made without departing from the scope of the present disclosure as defined by the appended claims.

## Claims

1. A vehicle battery module comprising:
a battery configured to output a battery voltage;
a first DC/DC converter configured to convert the battery voltage into a first DC module voltage lower than the battery voltage, and to output the first DC module voltage;
a second DC/DC converter configured to convert the battery voltage into a second DC module voltage higher than the first DC module voltage, and to output the second DC module voltage; and
an inverter configured to convert the battery voltage into an AC module voltage, and to output the AC module voltage.

2. The vehicle battery module of claim 1, wherein the battery is connected in parallel to an input end of the inverter, an input end of the first DC/ DC converter, and an input end of the second DC/DC converter.

3. The vehicle battery module of claim 1, wherein an output end of the first DC/DC converter is connected in parallel to a first load using the first DC module voltage as a driving voltage.

4. The vehicle battery module of claim 1, wherein the second DC/DC converter is configured to supply power to a second load using an integer multiple of the second DC module voltage as a driving voltage.

5. The vehicle battery module of claim 1, wherein the inverter is configured to supply, to an AC load, AC power according to the AC module voltage.

6. A single-phase vehicle battery system comprising:
a plurality of vehicle battery modules including a first DC module output end configured to output a first DC module voltage from an internal battery voltage, a second DC module output end configured to output a second DC module voltage, and an AC module output end configured to output an AC module voltage;
a first DC system output end in which the first DC module output ends, respectively included in the plurality of vehicle battery modules, are connected in parallel to each other;
a second DC system output end in which the second DC module output ends, respectively included in the plurality of vehicle battery modules, are connected in series to each other; and
an AC system output end in which the AC module output ends, respectively included in the plurality of vehicle battery modules, are connected in series to each other.

7. The single-phase battery system of claim 6, wherein each of the plurality of vehicle battery modules includes:
a battery configured to output the internal battery voltage;
a first DC/DC converter including the first DC module output end;
a second DC/DC converter including the second DC module output end; and
an inverter including the AC module output end.

8. The single-phase battery system of claim 7, wherein the battery is connected in parallel to an input end of the inverter, an input end of the first DC/DC converter, and an input end of the second DC/DC converter.

9. The single-phase battery system of claim 6, wherein the first DC system output end is configured to output the first DC module voltage, and is connected to a first load using the first DC module voltage as a driving voltage.

10. The single-phase battery system of claim 6, wherein the second DC system output end is configured to output an integer multiple of the second DC module voltage, and is connected to a second load using an integer multiple of the second DC module voltage as a driving voltage.

11. The single-phase battery system of claim 6, wherein the AC system output end is configured to output an integer multiple of the AC module voltage, and is connected to an AC load using the integer multiple of the AC module voltage as a driving voltage.

12. A three-phase vehicle battery system comprising:
a plurality of single-phase vehicle battery systems formed based on a plurality of vehicle battery modules including a first DC module output end configured to output a first DC module voltage from an internal battery voltage, a second DC module output end configured to output a second DC module voltage, and an AC module output end configured to output an AC module voltage, the plurality of single-phase vehicle battery systems each including a first DC system output end in which the first DC module output ends, respectively included in the plurality of vehicle battery modules, are connected in parallel to each other, a second DC system output end in which the second DC module output ends, respectively included in the plurality of vehicle battery modules, are connected in series to each other, and an AC system output end in which the AC module output ends, respectively included in the plurality of vehicle battery modules, are connected in series to each other,
wherein the AC system output ends, respectively included in the plurality of vehicle single-phase battery systems, are configured to output different AC system voltages having a same phase difference.

13. The three-phase battery system of claim 12, wherein the first DC system output ends, respectively included in the plurality of single-phase vehicle battery systems, are connected in parallel to each other to output the first DC module voltage.

14. The three-phase battery system of claim 12, wherein the second DC system output ends, respectively included in the plurality of single-phase vehicle battery systems, are connected in parallel to each other to output an integer multiple of the second DC module voltage.

15. The three-phase vehicle battery system of claim 12, wherein each of the plurality of vehicle battery modules includes:
a battery configured to output the battery voltage;
a first DC/DC converter including the first DC module output end;
a second DC/DC converter including the second DC module output end; and
an inverter including the AC module output end.
